# EUROPÄISCHE PATENTSCHRIFT

(11) **EP 0 597 413 B1**
(45) Veröffentlichungstag und Bekanntmachung des Hinweises auf die Patenterteilung: **18.09.1996**
(21) Anmeldenummer: 93118042.6
(22) Anmeldetag: 08.11.1993
(51) Int. Cl.: B23Q 16/10

(54) **Werkzeugrevolver**
Tool turret
Tourelle porte-outil

(30) Priorität: 13.11.1992 DE 4238281
(43) Veröffentlichungstag der Anmeldung: 18.05.1994
(73) Patentinhaber: Sauter Feinmechanik GmbH, D-72555 Metzingen (DE)
(72) Erfinder: Thumm, Helmut, D-72555 Metzingen (DE); Allgaier, Frieder, D-72661 Grafenberg (DE)
(74) Vertreter: Patentanwälte Bartels, Held und Partner

(56) Entgegenhaltungen:
- EP-A- 0 343 329
- WO-A-92/12570
- CH-A- 482 495
- DE-A- 3 738 551
- ELEKTROTECHNIK Bd. 40, Nr. 5 , Mai 1989 , SCHWEIZ Seiten 58 - 60 'Polumschaltbare Drehstrom-Asynchronmotoren mit PAM-wicklung'

## Beschreibung

Die Erfindung betrifft einen Werkzeugrevolver, der die Merkmale des Oberbegriffs des Anspruches 1 aufweist.

Bei diesen aus EP-A-0 343 329 bekannten Werkzeugrevolvern wird der Revolverkopf, wenn er in eine andere Winkelstellung gedreht wird, um ein anderes Werkzeug zum Einsatz bringen zu können, abrupt mittels des Vorindexierbolzens zum Stillstand gebracht, der in eine Bohrung des Revolverkopfes oder eines mit diesem fest verbundenen Teiles einfällt. Die mechanische Belastbarkeit der bei der abrupten Stillsetzung des Revolverkopfes durch den Vorindexierbolzen beanspruchten Teile legt deshalb die Indexierdrehzahl fest, die der Revolverkopf am Ende einer Beschleunigungsphase erreicht und mit der er anschließend bewegt wird, bis die neue Winkelstellung erreicht ist. Da die Beschleunigungsphase relativ kurz ist, ist die sogenannte Schaltzeit, also die Zeit, die benötigt wird, um den Revolverkopf in die neue Winkelstellung zu drehen, abgesehen von dem Drehwinkel, durch die Höhe der Indexierdrehzahl bestimmt.

Obwohl die bisher erreichbaren Schaltzeiten schon relativ kurz sind, besteht nach wie vor der Wunsch nach einer weiteren Verkürzung. Der Erfindung liegt deshalb die Aufgabe zugrunde, einen Werkzeugrevolver zu schaffen, der eine solche Verkürzung der Schaltzeit erreichen läßt, ohne andererseits einen wesentlich höheren Aufwand zu erfordern. Diese Aufgabe löst ein Werkzeugrevolver mit den Merkmalen des Anspruches 1.

Dank der Möglichkeit, außer der die Indexierdrehzahl ergebenden Polpaarzahl eine kleinere Polpaarzahl wählen zu können, mit der eine über der Indexierzahl liegende Drehzahl des Revolverkopfes erreicht werden kann, kann die Schaltzeit dadurch wesentlich verkürzt werden, daß der Revolverkopf bei einer Änderung der Winkelstellung zunächst auf eine Drehzahl beschleunigt wird, die höher ist als die Indexierdrehzahl, vorzugsweise doppelt so groß wie diese. Damit die Indexierung dennoch bei der Indexierdrehzahl erfolgt, braucht nur rechtzeitig vor dem Erreichen der neuen Winkelstellung der Motor wieder auf die die Indexierdrehzahl ergebende Polpaarzahl umgeschaltet zu werden. Er bremst dann den Revolverkopf auf die Indexierdrehzahl ab, so daß der Revolverkopf abrupt mittels des Vorindexierbolzens stillgesetzt werden kann. Allenfalls bei einer Drehung des Revolverkopfes um einen einzigen Schaltschritt reicht eventuell die Zeit nicht aus, um den Revolverkopf auf eine wesentlich über der Indexierdrehzahl liegende Drehzahl zu beschleunigen und dann wieder rechtzeitig vor Erreichen der neuen Winkelstellung auf die Indexierdrehzahl abzubremsen. Der Erzielung einer deutlich verkürzten Schaltzeit steht also nur der durch die Polumschaltung erforderliche Aufwand gegenüber, der relativ gering gehalten werden kann. Dies gilt in besonderem Maße dann, wenn die Statorwicklung des den Antrieb bildenden Drehstromasynchronmotors für eine Dahlanderschaltung ausgeführt ist. Zwar kann damit die Drehzahl nur auf den doppelten Wert der Indexierdrehzahl erhöht werden. Dafür brauchen aber im Statorblechpaket nicht zwei Wicklungen untergebracht zu werden, sondern nur eine einzige Wicklung mit Anzapfungen.

Bei den Werkzeugrevolvern, deren Revolverkopf mittels eines in Richtung der Drehachse des Revolverkopfes verschiebbaren Verriegelungsgliedes erfolgt, das in der Verriegelungsstellung mit einer Planverzahnung gleichzeitig in zwei Zahnkränze des Revolverkopfes bzw. des Revolvergehäuses eingreift, und die axiale Verschiebung des Verriegelungsgliedes durch eine Verdrehung eines vom Antriebsmotor antreibbaren Steuergliedes relativ zum Verriegelungsglied gesteuert wird, führt die Massenträgheit des Revolverkopfes während des Abbremsvorgangs infolge der Polumschaltung des Antriebsmotors zu einer Verdrehung des Steuergliedes relativ zum Verriegelungsglied. Diese Verdrehung hat zur Folge, daß das Verriegelungsglied im Sinne einer Bewegung in seine Verriegelungsstellung gegen die Zahnkränze des Revolverkopfes und des Revolvergehäuses bewegt wird. Wären wie bei den bekannten Werkzeugrevolvern sowohl die Planverzahnung des Verriegelungsgliedes als auch die Zahnkränze des Revolverkopfes und des Revolvergehäuses in der Art einer Hirth-Verzahnung ausgeführt, dann würden die Köpfe der Zähne des Verriegelungsgliedes über die Zähne der beiden Zahnkränze unter Zeugung eines starken Rattergeräusches gleiten oder sogar in einer anderen Drehstellung als der zu erreichenden neuen Drehstellung in Eingriff kommen. Sowohl ein solches Rattergeräusch als auch ein Verriegeln des Revolverkopfes in einer anderen Drehstellung als der zu erreichenden neuen Drehstellung wird bei der erfindungsgemäßen Lösung durch die Anlageflächen verhindert, die während des Abbremsvorganges in Anlage aneinder kommen, aber verhindern, daß Zähne des Verriegelungsgliedes in die Zahnlücken der beiden Ringflächen des Revolverkopfes bzw. des Revolvergehäuses eingreifen können. Die Anlage der Anlageflächen aneinander trägt sogar dazu bei, den während des Abbremsvorgangs auftretenden Drehzahlunterschied möglichst rasch zu beseitigen.

Das Signal zur Polumschaltung und damit zum Beginn des Bremsvorganges kann vom Winkelpositionsgeber des Werkzeugrevolvers erzeugt werden, und zwar, sofern der Winkelpositionsgeber dies ermöglicht, zu dem gewünschten Zeitpunkt, der vorzugsweise der spätest mögliche Zeitpunkt ist und beispielsweise einer Winkelstellung von 20° vor der Winkelstellung entspricht, in welcher die Verriegelung erfolgt. Steht jedoch nur ein Winkelpositionsgeber zur Verfügung, der nur in jeder eine Verriegelung zulassenden Winkelstellung ein Signal zu erzeugen vermag, ist der erfindungsgemäße Werkzeugrevolver vorzugsweise gemäß Anspruch 4 ausgebildet. Da bei einem solchen Winkelpositionsgeber in der Regel ein sofortiger Beginn des Bremsvorganges in der der neuen Winkelstellung unmittelbar vorausgehenden Winkelstellung dazu führen würde, daß der Abbremsvorgang zu früh beendet wäre, wird durch das Signalverzögerungsglied der Bremsbeginn verzögert. Bei einer bevorzugten Ausführungsform hat das Signalverzögerungsglied eine einstellbare Verzögerungszeit, um die Zeitverzögerung an die Gegebenheiten des Werkzeugrevolvers anzupassen und insbesondere auch auf die Größe des Winkels zwischen zwei aufeinanderfolgenden Winkelstellungen einstellen zu können.

Besonders vorteilhaft ist es, die Anlageflächen zwischen den Zähnen und Zahnlücken anzuordnen. Den hierfür erforderlichen Platz erhält man in einfacher Weise dadurch, daß man die Anzahl der Zähne und Zahnlücken gleich der Anzahl der wählbaren Winkelstellungen des Revolverkopfes wählt und je einen Zahn oder eine Zahnlücke jeder Winkelstellung zuordnet. Nur in wählbaren Winkelstellungen wird dann die Verschiebung des Verriegelungsgliedes in die Verriegelungsstellung, in welcher die Zähne im Eingriff mit den Zahnlücken sind, nicht durch die Anlageflächen behindert.

Statt je eines Zahnes oder einer Zahnlücke für jede wählbare Winkelstellung kann man selbstverständlich auch Gruppen von Zähnen und Zahnlücken vorsehen. Es muß dabei nur sichergestellt sein, daß zwischen diesen Gruppen noch Platz vorhanden ist für die Anlageflächen.

Statt einer Anlage von Anlageflächen zwischen den Zähnen oder Zahnlücken ist es selbstverständlich auch möglich, die Anlageflächen außerhalb der die Zähne und Zahnlücken aufweisenden Ringflächen vorzusehen.

Im folgenden ist die Erfindung anhand eines in der Zeichnung dargestellten Ausführungsbeispiels im einzelnen erläutert. Es zeigen:
- Fig. 1: ein Drehzahl- Schwenkwinkel-Diagramm für eine Verdrehung des Revolverkopfes um einen einzigen Schaltschritt in der einen Richtung,
- Fig. 2: ein Drehzahl-Schwenkwinkel-Diagramm für eine Verdrehung des Revolverkopfes über zwei Schaltschritte in der einen Drehrichtung,
- Fig. 3: ein Drehzahl-Schwenkwinkel-Diagramm für eine Drehbewegung des Revolverkopfes in der entgegengesetzten Drehrichtung über drei Schaltschritte,
- Fig. 4: ein Blockschaltbild des Ausführungsbeispiels.
- Fig. 5: einen unvollständig und teilweise schematisch dargestellten Längsschnitt des Ausführungsbeispiels,
- Fig. 6: eine unvollständige Ansicht der Verriegelungseinrichtung und des zugehörigen Steuergliedes in der Verriegelungsstellung des Verriegelungsgliedes,
- Fig. 7: eine Ansicht entsprechend Fig. 6 im entriegelten Zustand des Revolverkopfes,
- Fig. 8: eine Ansicht entsprechend den Fig. 6 und 7 der Verriegelungseinrichtung und des Steuergliedes während des Abbremsvorgangs infolge einer Polumschaltung des Antriebsmotors,
- Fig. 9: eine Ansicht entsprechend Fig. 6 einer Abwandlung des Ausführungsbeispiels im verriegelten Zustand,
- Fig. 10: eine Ansicht entsprechend Fig. 7 des abgewandelten Ausführungsbeispiels im entriegelten Zustand des Revolverkopfes.

Ein Werkzeugrevolver, dessen Revolverkopf 1 in zwölf unterschiedliche Winkelstellungen einstellbar ist, so daß ein Schaltschritt, also eine Drehung von einer Winkelstellung in die nächstfolgende Winkelstellung, sich über einen Schwenkwinkel von 30° erstreckt, unterscheidet sich von den bekannten Werkzeugrevolvern dieser Art mit einem Drehstromasynchronmotor 2 als Antrieb für den Revolverkopf 1 durch eine modifizierte Steuereinrichtung 3 und eine Ausführung der Statorwicklung des Drehstromasynchronmotores 2 derart, daß sie für eine Dahlanderschaltung geeignet ist. Die größere der beiden wählbaren Polpaarzahlen des Drehstromasynchronmotors 2 ist dabei der Indexierdrehzahl zugeordnet, d.h. derjenigen Drehzahl, mit welcher der Revolverkopf in die neue Winkelstellung einfährt, damit beim Einfallen eines Vorindexierbolzens 4 zum Zwecke der Stillsetzung des Revolverkopfes 1 in der neuen Winkelstellung die zulässige mechanische Belastung der an dieser abrupten Stillsetzung des Revolverkopfes 1 beteiligten Bauteile nicht überschritten wird. Die zweite wählbare Polpaarzahl ergibt deshalb eine maximale Drehzahl des Revolverkopfes 1, die doppelt so groß ist wie die Indexierdrehzahl. In den Diagrammen ist die Indexierdrehzahl mit nᵢ, die zweite Drehzahl 2nᵢ gekennzeichnet.

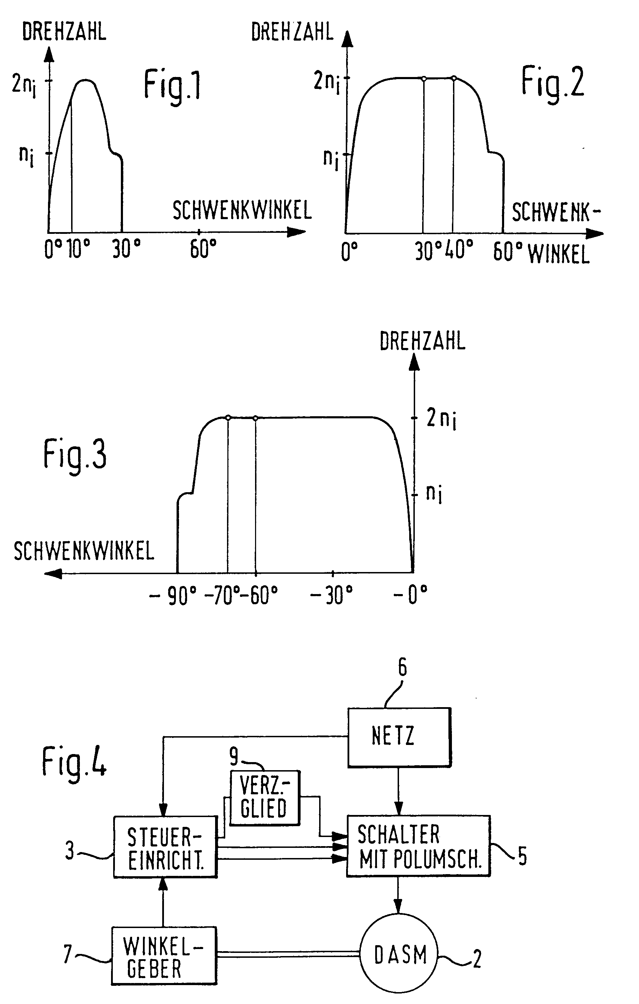

Sofern der Revolverkopf 1 nur um einen Schaltschritt, also im Ausführungsbeispiel nur um 30°, weitergedreht werden muß, hängt die Arbeitsweise der Steuereinrichtung 3 davon ab, ob die Indexierdrehzahl nᵢ bis zum Beginn des Bremsvorganges nennenswert überschritten werden kann oder nicht. Ist eine nennenswerte Überschreitung möglich, was in Fig. 1 unterstellt ist, dann liefert der Winkelpositionsgeber 7 des Werkzeugrevolvers je nach dem, ob er Signale nur in den eine Verriegelung gestattenden oder auch in anderen Winkelstellungen abzugeben vermag, zu Beginn des Schaltvorganges bzw. zu einem späteren Zeitpunkt, im Ausführungsbeispiel in einer Winkelstellung von 10°, ein Signal an die Steuereinrichtung 3. Im erstgenannten Fall wird das Bremssignal von einem Verzögerungsglied 9 bis zum spätest möglichen Bremsbeginn verzögert, also dem Zeitpunkt, zu dem ein Schalter 5 die Umschaltung des Drehstromasynchronmotors 2 auf die größere Polpaarzahl bewirkt haben muß. Im zweitgenannten Fall ist kein Verzögerungsglied erforderlich, weil der Drehwinkel, bei dem der Winkelpositionsgeber 7 das Signal erzeugt, so gewählt ist, daß unter Berücksichtigung der schaltungsbedingten Verzögerungen, die im Ausführungsbeispiel dazu führen, daß zunächst die Drehzahl noch weiter ansteigt, der Bremsvorgang rechtzeitig einsetzt und damit die Indexierdrehzahl nᵢ kurz vor der neuen Schaltungstellung des Revolverkopfes 1, die im Ausführungsbeispiel bei 30° liegt, erreicht ist. Mit der Indexierdrehzahl nᵢ wird dann der Revolverkopf 1 weiterbewegt, bis der in üblicher Weise ausgebildete und arbeitende Vorindixierbolzen 4 aufgrund eines vom Winkelpositionsgeber 7 erzeugten Signals in eine Bohrung des Revolverkopfes 1 oder, wie im Ausführungsbeispiel, eines mit diesem fest verbundenen, flanschförmigen Bauteils 8 einfällt, wodurch der Revolverkopf 1 in der neuen Winkelstellung abrupt stillgesetzt wird. Danach wird der mit Hilfe einer Verriegelungseinrichtung auf seine exakte Winkelposition ausgerichtet und in dieser verriegelt.

Sofern bei einer Drehung des Revolverkopfes 1 um nur einen Schaltschritt der Drehstromasynchronmotor 2 den Revolverkopf 1 nicht auf eine nennenswert über der Indexierdrehzahl nᵢ liegende Drehzahl zu beschleunigen vermag, wird zu Beginn des Drehvorganges durch das von der Steuereinrichtung 3 erzeugte Einschaltsignal, das über eine Direktverbindung dem Schalter 5 zugeführt wird, der Drehstromasynchronmotor 2 nicht mit der kleineren, sondern mit der größeren der beiden Polpaarzahlen, mit dem Energieversorgungsnetz 6 verbunden. Der Revolverkopf 1 wird dadurch in sehr kurzer Zeit auf die Indexierdrehzahl nᵢ beschleunigt. Mit dieser Indexierdrehzahl bewegt sich dann der Revolverkopf 1 weiter, bis er die nächste Winkelstellung erreicht hat. In dieser neuen Winkelstellung fällt der Indexierbolzen 4 ein.

Wenn hingegen, wie in Fig. 2 dargestellt, der Revolverkopf 1 um zwei Schaltschritte, im Ausführungsbeispiel also um 60°, weitergedreht werden soll, erzeugt die Steuereinrichtung 3 ein erstes Signal, das über eine zweite Direktverbindung dem Schalter 5 zugeführt wird. Dieser wählt aufgrund dieses Signales die kleinere der beiden Polpaarzahlen aus und verbindet den Drehstromasynchronmotor 2 mit dem Energieversorgungsnetz 6. Der Revolverkopf 1 wird deshalb auf den doppelten Wert der Indexierdrehzahl beschleunigt, also auf die Drehzahl 2nᵢ. Mit dieser Drehzahl durchfährt er die nächste Winkelstellung. Je nach Ausbildung des direkt oder indirekt vom Drehstromasynchronmotor 2 angetriebenen Winkelpositionsgebers 7 erzeugt dieser dabei oder in einer im Ausführungsbeispiel um 10° später folgenden Winkelstellung ein Bremssignal. Dieses Bremssignal tritt im erstgenannten Fall an einem Ausgang der Steuereinrichtung 3 auf, der mit dem Eingang des Signalverzögerungsgliedes 9 verbunden ist, dessen Verzögerungszeit einstellbar sein kann. Die Verzögerungszeit des Signalverzögerungsgliedes 9 ist so gewählt, daß die Polumschaltung des Drehstromasynchronmotors 2 auf seine höhere Polpaarzahl zu einem Zeitpunkt erfolgt, der im Ausführungsbeispiel einem Schwenkwinkel von etwa 10° entspricht. Im zweitgenannten Fall wird kein Signalverzögerungsglied benötigt, weil die Steuereinrichtung zeitrichtig das Bremssignal erhält und an den Schalter 5 weitergibt. Infolge des nach der Polumschaltung übersynchronen Laufs des Drehstromasynchronmotors 2 bremst dieser den Revolverkopf 1 bis auf die Indexierdrehzahl nᵢ ab, die erreicht wird, kurz bevor der Revolverkopf 1 in die neue, bei 60° liegende Winkelstellung gelangt. Es ist deshalb sichergestellt, daß beim Eintreten in die neue Winkelstellung der Revolverkopf 1 die Indexierdrehzahl nᵢ hat. Deshalb kann nun aufgrund eines Signals des Winkelpositionsgebers 7 der Vorindexierbolzen 4 einfallen und den Revolverkopf 1 abrupt stillsetzen. Gleichzeitig wird aufgrund eines direkt von der Steuereinrichtung 3 zum Schalter 5 übertragenen Signals der Drehstromasynchronmotor 2 vom Energieversorgungsnetz 6 getrennt. Die sich anschließende genaue Positionierung des Revolverkopfes 1 und seine Verriegelung in der neuen Stellung erfolgt in der nachfolgend beschriebenen Weise.

Selbstverständlich kann, wie Fig. 3 zeigt, der Revolverkopf 1 nicht nur in der einen Drehrichtung, sondern auch in der entgegengesetzten Drehrichtung in eine neue Winkelstellung gedreht werden. Fig. 3 zeigt dies am Beispiel einer Verdrehung um drei Schaltschritte. Nach einer Beschleunigung auf die maximale Drehzahl 2nᵢ erzeugt die Steuereinrichtung 3 beispielsweise beim Durchfahren der vorletzten Winkelstellung das Bremssignal, das von dem Signalverzögerungsglied 9 zunächst noch unwirksam gemacht wird. Der durch eine Polumschaltung bewirkte Bremsvorgang wird, wie Fig. 3 zeigt, zu einem Zeitpunkt eingeleitet, der das Erreichen der Indexierdrehzahl nᵢ kurz vor der neuen Winkelposition sicherstellt. In dieser erfolgt dann wieder die Stillsetzung des Revolverkopfes 1 mittels des Vorindexierbolzens 4, die Abschaltung des Drehstromasynchronmotors 2 vom Energieversorgungsnetz 6, die genaue Ausrichtung des Revolverkopfes 1 auf die neue Winkelstellung und seine Verriegelung in dieser.

Zwar lassen sich die Schaltzeiten bei einem einzigen Schaltschritt und bei einer Verdrehung über mehr als einen Schaltschritt nicht auf die Hälfte reduzieren. Bei einer Verdrehung des Revolverkopfes 1 über wenigstens zwei Schaltschritte lassen sich aber, wie sich aus einem Flächenvergleich der in den Fig. 2 und 3 dargestellten Diagramme mit einem Diagramm ergibt, bei dem die maximale Drehzahl gleich der Indexierdrehzahl nᵢ ist, die Schaltzeiten zumindest auf 80% - 70% der Schaltzeit reduzieren, die man bei einer Schwenkbewegung mit der Indexierdrehzahl nᵢ erhält.

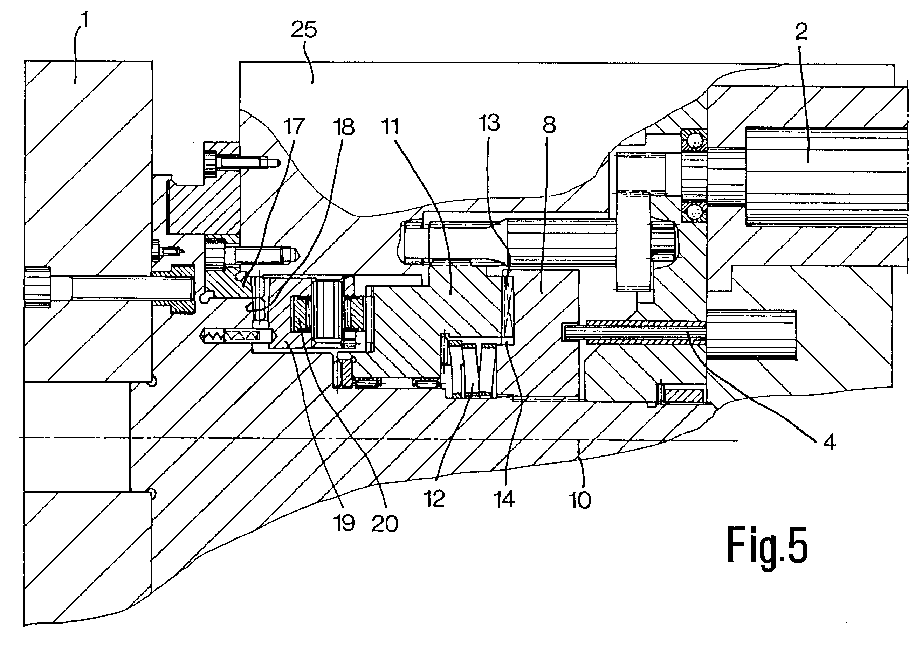

Wie Fig. 5 zeigt, treibt der Drehstromasynchronmotor 2 über ein Zwischengetriebe ein drehbar auf einer Antriebswelle 10 angeordnetes Steuerglied 11 an, das auf seiner dem Revolverkopf 1 zugekehrten Stirnseite eine Kurvenbahn aufweist. Das Steuerglied 11 wird von einem Federpaket 12, das sich an einer Schulter der Antriebswelle 10, die mit dem Revolverkopf 1 verschraubt ist, abstützt und auf das Steuerglied 11 eine gegen den Revolverkopf 1 gerichtete Federkraft ausübt.

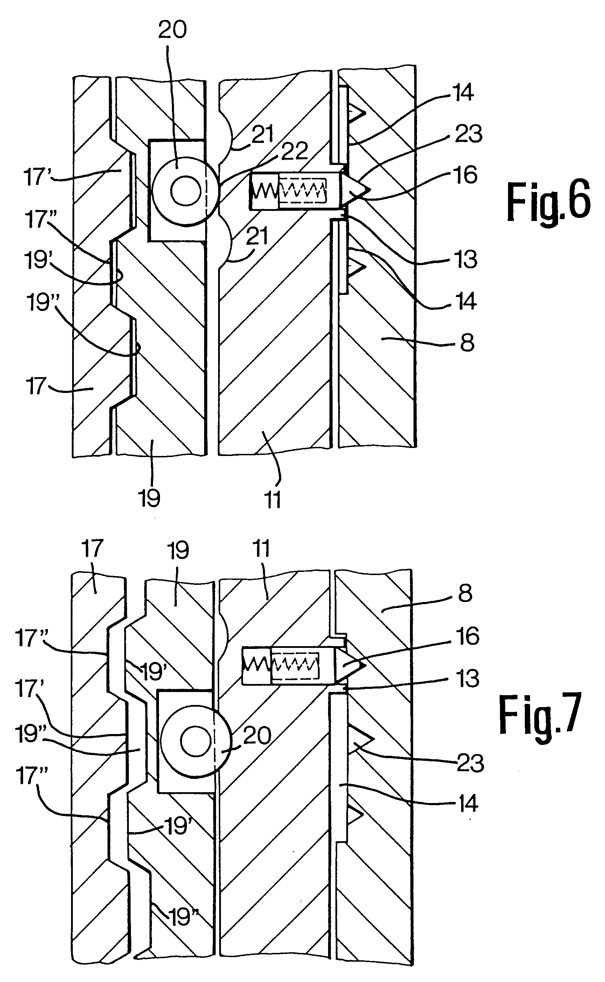

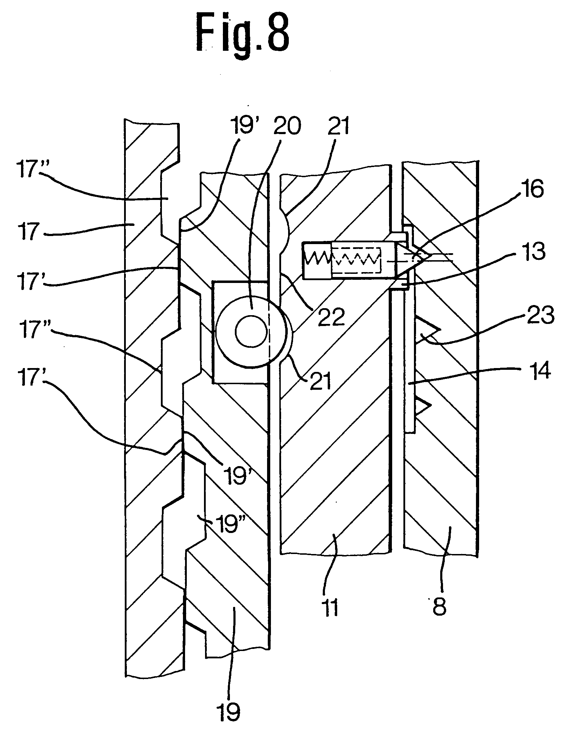

Der Antrieb der Antriebswelle 10 erfolgt vom Steuerglied 11 aus mit Hilfe von in axialer Richtung überstehenden Klauen 13, welche in je eine Nut 14 des flanschförmigen Bauteils 8 der Antriebswelle 10 eingreifen. Wie die Fig. 6 und 7 zeigen, ist die in Umfangsrichtung gemessene Breite der Nuten 14 wesentlich größer als die in dieser Richtung gemessene Breite der Klauen 13. Federbelastete Bolzen 16, welche in die Klauen 13 durchdringenden, axial verlaufenden Bohrungen geführt sind, rasten in einer Mittelstellung des Steuergliedes 11 sowie in zwei Endstellungen in kegelige Bohrungen ein, die am Grund der Nuten 14 vorgesehen sind.

Für eine Verriegelung des Revolverkopfes 1 in den wählbaren Winkelstellungen ist mit dem Revolvergehäuse 25 ein konzentrisch zur Antriebsachse 10 angeordneter Ring 17 verschraubt, welcher auf seiner dem Steuerglied 11 zugekehrten Stirnseite eine Planverzahnung aufweist, die aus einer der Anzahl der wählbaren Winkelstellungen gleichen Zahl von Zähnen 17' und einer entsprechenden Anzahl von Zahnlücken 17'' besteht. Wie die Fig. 6 und 7 zeigen, haben die Zähne 17' und die Zahnlücken 17'' ein Trapezprofil. Ein entsprechend ausgebildeter Zahnring 18 ist an einem Flanschteil der Antriebswelle 10 vorgesehen. In den wählbaren Winkelstellungen des Revolverkopfes 1 fluchten die Zähne des Zahnringes 18 mit den Zähnen 17' und die Zahnlücken des Zahnringes 18 mit den Zahnlücken 17'. Außerdem liegen die Zahnköpfe je in einer einzigen Radialebene. Zwischen dem Ring 17 und dem Zahnring 18 einerseits sowie der Kuvenbahn des Steuergliedes 11 andererseits ist auf der Antriebswelle 10 drehbar und in ihrer Längsrichtung verschiebbar ein Verriegelungsglied 19 angeordnet, das auf seiner dem Ring 17 und dem Zahnring 18 zugekehrten Stirnseite eine der Zahl der wählbaren Winkelstellungen entsprechende Anzahl von Zähnen 19' und Zahnlücken 19'' aufweist. Die Zähne 19' und die Zahnlücken 19'' haben das gleiche Profil wie die Zähne 17' bzw. die Zahnlücken 17''. Außerdem liegen die Kopfenden der Zähne 19' ebenfalls in einer gemeinsamen Radialebene.

Drehbar im Verriegelungsglied 19 gelagerte Rollen 20 laufen auf der Kurvenbahn des Steuergliedes 11, die für jede der Rollen 20 zwischen zwei Vertiefungen 21 einen planen Abschnitt 22 bildet. wie Fig. 6 zeigt, liegt die Rolle 20 dann, wenn das Verriegelungsglied 19 sich in seiner Verriegelungsstellung befindet, auf dem planen Abschnitt 22 auf. In dieser Position ist der Bolzen 16 in die mittlere kegelige Bohrung 23 im Grund der Nut 14 eingerastet.

Der Revolverkopf 1 wird dadurch entriegelt, daß der Drehstromasynchronmotor 2 zunächst nur das Steuerglied 11 in Drehung versetzt. Dabei gelangt die Rolle 20 je nach Drehrichtung des Steuergliedes 4 in die eine oder andere der beiden Vertiefungen 21, wodurch sich das Verriegelungsglied 19 in die in Fig. 7 dargestellte Entriegelungsstellung bewegt, in welche seine Zähne 19' vollständig aus den Zahnlücken 17'' des Ringes 17 und auch aus den jenigen des Zahnringes 18 ausgehoben sind. Erst wenn, wie Fig. 7 ebenfalls zeigt, die Klauen 13 in Anlage an die seitliche Begrenzungsfläche der Nuten 14 gekommen sind, werden die Antriebswelle 10 und zusammen mit ihr der Revolverkopf 1 in Drehung versetzt.

Sobald zum Zwecke der Abbremsung der rotierenden Massen der Drehstromasynchronmotor 2 auf die größere Polpaarzahl umgeschaltet wird, wird auf das Steuerglied 11 ein Bremsmoment ausgeübt. Dies hat zur Folge, daß die Drehzahl des Steuergliedes 11 gegenüber der Drehzahl des Verriegelungsgliedes 19 verringert wird. Letzteres wird deshalb in axialer Richtung gegen den Ring 17 und den Zahnring 18 bewegt, weil die Rollen 20 die Rampe zum planen Abschnitt 22 hin hinauflaufen. Die axiale Verschiebung des Verriegelungsgliedes 19 wird zunächst dadurch beendet, daß die Kopffläche der Zähne 19' in Anlage an die Kopffläche der Zähne 17' gelangt, wie Fig. 8 zeigt. Die Kopfflächen bilden also Anlageflächen, die verhindern, daß während des Abbremsvorgangs die Zähne 19' in Eingriff mit einer der Zahnlücken 17'' gelangen können.

Die Anpressung der Zähne 19' an die Kopfflächen der Zähne 17' unterstützt die Abbremsung des Verriegelungsgliedes 19 sowie am Ende des Abbremsvorganges die Ausrichtung der Rollen 20 wieder auf den tiefsten Punkt der Vertiefung 21. Nach der Vorindexierung kann deshalb das Verriegelungsglied 19 durch eine Rotationsbewegung des Steuergliedes 11 in der entgegengesetzten Drehrichtung in die Verriegelungsstellung geschoben werden, in welcher die Zähne 19' in spielfreiem Eingriff mit den Zahnlücken 17' sowie den entsprechenden Zahnlücken des Zahnringes 18 stehen. Bei dieser Drehung des Steuergliedes 19 in der entgegengesetzten Drehrichtung werden die Klauen 13 wieder auf die Mitte der Nuten 14 ausgerichtet, wobei die Bolzen 16 in die mittlere kegelige Bohrung einfallen.

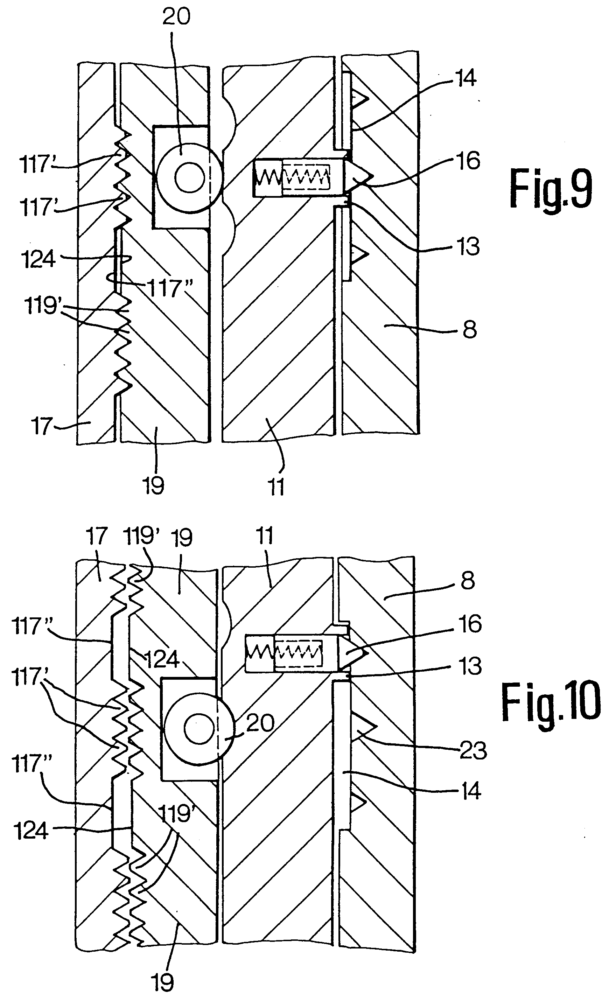

Wie die Fig. 9 und 10 zeigen, kann man statt nur eines einzigen Zahnes pro wählbarer Winkelstellung auch je eine Gruppe von Zähnen vorsehen, welche die bei Werkzeugrevolvern übliche Profilform haben. In der Verriegelungsstellung des Verriegelungsgliedes 19 stehen dann beispielsweise vier Zähne 119' in Eingriff mit vier Zahnlücken 117'' des Ringes 17 in Eingriff. Die zwischen den Gruppen von Zähnen 119' vorgesehenen, planen Anlageflächen 124 stehen geringfügig über die von den Kopfflächen der Zähne 119' definierte Radialebene über. Die Lücken 117'' zwischen den Gruppen von Zähnen 117' des Ringes 17 sind, wie Fig. 9 zeigt, so geformt, daß in der Verriegelungsstellung des Verriegelungsgliedes 19 die Anlageflächen 124 in diese Zahnlücken 117'' vollständig eintauchen können.

Wenn gegen Ende der Drehbewegung des Revolverkopfes 1 in eine neue Winkelstellung durch die Polumschaltung des Drehstromasynchronmotors 2 das Verriegelungsglied 19 gegen den Ring 17 bewegt wird, kommen die Anlageflächen 124 in Anlage an die Kopfflächen der Zähne 117' des Ringes 117. Es wird deshalb wie bei der Ausführungsform gemäß den Fig. 6 bis 8 ein Rattergeräusch sowie eine Verriegelung des Revolverkopfes in einer falschen Winkelstellung zuverlässig ausgeschlossen.

## Patentansprüche

1. Werkzeugrevolver mit
a) einem relativ zum Revolvergehäuse (25) in wählbare Winkelstellungen drehbaren und in jeder dieser Winkelstellungen verriegelbaren Revolverkopf (1), der Aufnahmen für Werkzeuge aufweist,
b) einem Vorindexierbolzen (4), der den Revolverkopf bei einem der Drehung in eine andere Winkelstellung dienenden Schaltvorgang formschlüssig festhält, sobald der Revolverkopf die neue Winkelstellung erreicht hat,
c) einem Drehstromasynchronmotor (2) als Drehantrieb für den Revolverkopf,
d) einer Verriegelungseinrichtung zum Verriegeln des Revolverkopfes in jeder der wählbaren Winkelstellungen mit einem zur Drehachse des Revolverkopfes konzentrischen und in Richtung dieser Drehachse verschiebbaren Verriegelungsglied (19), das in seiner Verriegelungsstellung mit an seiner einen Stirnseite vorgesehenen Zähnen in Zahnlücken sowohl einer Ringfläche des Revolverkopfes als auch einer Ringfläche des Revolvergehäuses gleichzeitig eingreift und dessen axiale Bewegung mittels einer Steuerkurve eines relativ zum Verriegelungsglied verdrehbaren sowie mit dem Drehstromasynchronmotor in Drehverbindung stehenden Steuergliedes (11) steuerbar ist,
e) einem den Drehstromasynchronmotor mit dem Revolverkopf verbindenden Getriebe, dessen Übersetzung auf die Polpaarzahl und die daraus resultierende synchrone Drehzahl des Drehstromasynchronmotors so abgestimmt ist, daß der Revolverkopf bei seiner Drehbewegung in eine andere Winkelstellung die aufgrund der Vorindexierung mittels des Vorindexierbolzens begrenzte Indexierdrehzahl erreicht, und
f) einer Steuereinrichtung (3) für den Vorindexierbolzen und den Drehstromasynchronmotor,
dadurch gekennzeichnet, daß
g) der Drehstromasynchronmotor (2) polumschaltbar ausgebildet ist,
h) die zusätzliche Polpaarzahl kleiner ist als die die Indexierdrehzahl (nᵢ) ergebende Polpaarzahl,
i) die Steuereinrichtung (3) die größere Polpaarzahl zu einem Zeitpunkt wirksam macht, an dem sichergestellt ist, daß die Abbremsung des Revolverkopfes (1) auf die Indexierdrehzahl (nᵢ) beendet ist, ehe der Revolverkopf (1) vom Vorindexierbolzen (4) festgehalten wird, und
k) sowohl dem Verriegelungsglied (19) als auch der Ringfläche des Revolvergehäuses (25) Anlageflächen zugeordnet sind, die je in einer Ebene liegen, zu der die Drehachse des Revolverkopfes (1) lotrecht verläuft, und einen Eingriff der Zähne (19'; 119') des Verriegelungsgliedes (19) in die Zahnlücken (17''; 117'') der Ringfläche (17) des Revolvergehäuses (25) in allen anderen als den wählbaren Winkelstellungen des Revolverkopfes (1) durch eine Anlage aneinander ausschließen.

2. Werkzeugrevolver nach Anspruch 1, dadurch gekennzeichnet, daß die Statorwicklung des Drehstromasynchronmotors (2) als Dahlanderwicklung ausgeführt ist.

3. Werkzeugrevolver nach Anspruch 1 oder 3, dadurch gekennzeichnet, daß die Steuereinrichtung (3) die Polumschaltung aufgrund eines Signals auslöst, das ein Winkelpositionsgeber (7) in der dem Beginn des Bremsvorganges entsprechenden Winkelstellung liefert.

4. Werkzeugrevolver nach Anspruch 1 oder 2, dadurch gekennzeichnet, daß die Steuereinrichtung (3) während eines Schaltvorganges des Revolverkopfes (1) beim Erreichen der unmittelbar vor der neuen Winkelstellung liegenden, eine Verriegelung gestattenden Winkelstellung ein von einem Winkelpositionsgeber initiiertes Vorsignal erzeugt, gegenüber dem zeitlich verzögert das die Einleitung des Bremsvorganges auslösende Signal wirksam gemacht wird.

5. Werkzeugrevolver nach Anspruch 4, dadurch gekennzeichnet, daß der Steuereinrichtung (3) ein Signalverzögerungsglied (9) mit einstellbarer Verzögerungszeit zugeordnet ist, das die zeitliche Verzögerung des den Bremsvorgang auslösenden Signals gegenüber dem Vorsignal festlegt.

6. Werkzeugrevolver nach einem der Ansprüche 1 bis 5, dadurch gekennzeichnet, daß die Anlageflächen durch die Kopfflächen der Zähne (17', 19') oder durch Flächen (117'', 124) zwischen den Zähnen (117', 119') gebildet sind.

7. Werkzeugrevolver nach einem der Ansprüche 1 bis 5, dadurch gekennzeichnet, daß die Anlageflächen am Verriegelungsglied und am Revolvergehäuse außerhalb der die Zähne und Zahnlücken aufweisenden Ringflächen vorgesehen sind.

8. Werkzeugrevolver nach Anspruch 6 oder 7, dadurch gekennzeichnet, daß die Anzahl der Zähne (17', 19') und der Zahnlücken (17'', 19'') der Zahl der wählbaren Winkelstellungen des Revolverkopfes (1) entspricht und je ein Zahn (17', 19') oder eine Zahnlücke (17'', 19'') jeder wählbaren Winkelstellung zugeordnet ist.

9. Werkzeugrevolver nach Anspruch 7, dadurch gekennzeichnet, daß jeder wählbaren Winkelstellung eine Gruppe von Zähnen (17', 19') oder Zahnlücken (17'', 19'') zugeordnet ist.

## Claims

1. A tool turret comprising
a) a rotary turret (1) rotatable in relation to the turret casing (25) in selectable angular positions and lockable in each of these angular positions, including pockets for tools,
b) a pre-indexing pin (4) locking the turret in contact when changing to another angular position in order to rotate it, as soon as the turret has reached a new angular position,
c) a three-phase asynchronous motor (2) acting as a rotary drive for the turret,
d) a locking means for locking the turret in any of the selectable angular positions including a locking unit (19) provided concentrically to the rotary axis of the turret and displaceable in the direction of the said rotary axis, engaging simultaneously into gaps between teeth provided on its face both in an annular face of the turret and an annular face of the turret casing when in locked position, with its axial movement being controllable by means of a control cam of a control means (11) rotatable in relation to the locking unit and being rotatably connected to the three-phase asynchronous motor,
e) a transmission connecting the three-phase asynchronous motor with the turret, with its ratio being matched to the number of pole pairs and the synchronous speed of the three-phase asynchronous motor resulting from the same in order to allow the turret to reach an indexing speed during rotation to another angular position, limited due to pre-indexing by means of the pre-indexing pin,
f) a control unit (3) for the pre-indexing pin and the three-phase asynchronous motor,
wherein
g) the three-phase asynchronous motor (2) is designed with change-over poles,
h) the additional number of pole pairs is smaller than the number of pole pairs, resulting in the indexing speed (nᵢ),
i) the control unit (3) makes the larger number of pole pairs effective at a point in time when deceleration of the turret (1) to indexing speed (nᵢ) is completed before the turret (1) is stopped by the pre-indexing pin (4) and
k) both the locking unit (19) and the annular area of the turret casing (25) are allocated to support faces in each plane, to which the rotary axis of the turret (1) is provided vertically in order to eliminate engagement of the teeth (19'; 119') of the locking unit (19) in the gaps between the teeth (17''; 117'') of the annular area (17) of the turret casing (25) in any other than the selectable angular positions of the turret (1) by contacting each other.

2. A tool turret according to Claim 1, wherein the stator winding of the three-phase asynchronous motor (2) is provided as a Dahlander winding.

3. A tool turret according to Claims 1 or 3, wherein the control unit (3) triggers changeover of the poles by a signal generated by an angular position sensor (7) when in an angular position, corresponding to the onset of deceleration.

4. A tool turret according to Claims 1 or 2, wherein a control unit (3) generates a presignal initiated by an angular position sensor during changeover of the turret (1) when reaching an angular position directly prior to a new angular position, allowing locking, in relation to which the time-delayed signal triggering the onset of deceleration becomes effective.

5. A tool turret according to Claim 4, wherein the control unit (3) has been allocated a signal delay means (9) having an adjustable delay time, setting the time delay of the signal triggering deceleration in relation to a presignal.

6. A tool turret according to one of Claims 1 to 5, wherein the contact areas are formed by the tip areas of the teeth (17', 19') or the gaps (117'', 124'') between the teeth (117', 119').

7. A tool turret according to one of Claims 1 to 5, wherein contact areas are provided on the locking means and on the turret casing outside the annular areas including teeth and gaps between the said teeth.

8. A tool turret according to Claims 6 or 7, wherein the number of teeth (17', 19') and the gaps between the teeth (17'', 19'') is equal to the number of selectable angular positions of the turret (1), and with one tooth (17', 19') or gap between the teeth (17'', 19'') each being allocated to each selectable angular position.

9. A tool turret according to Claim 7, wherein a group of teeth (17', 19') or gaps between the teeth (17'', 19'') is allocated to each selectable angular position.

## Revendications

1. Tourelle porte-outils comprenant
a) une tête revolver (1), qui peut être orientée dans différentes positions relatives par rapport au carter de la tourelle (25) et verrouillée dans chacune de ces positions relatives, laquelle est munie de systèmes de réception des outils,
b) un tourillon préindexé (4) qui, pendant le processus de commande faisant pivoter la tête revolver vers une autre position relative, bloque la tête revolver dès que celle-ci a atteint la nouvelle position relative,
c) un moteur triphasé asynchrone (2), utilisé comme moteur de pivotement de la tête revolver,
d) un dispositif de verrouillage pour verrouiller la tête revolver dans chacune des positions relatives souhaitées, comprenant un organe de verrouillage (19), concentrique par rapport à l'axe de rotation de la tête revolver et mobile dans le sens de cet axe de rotation, dont les dents réalisées sur l'une de ses faces frontales s'engagent, dans sa position de verrouillage, en même temps dans les entredents d'un anneau de la tête revolver et les entredents d'un anneau du carter de la tourelle, et dont le mouvement axial peut être commandé par l'intermédiaire d'une came de commande d'un organe de manoeuvre (11) qui peut être animé d'un mouvement de rotation relatif par rapport à l'organe de verrouillage et qui est relié au moteur triphasé asynchrone,
e) un engrenage reliant le moteur triphasé asynchrone à la tête revolver, dont le rapport de transmission est déterminé par le nombre de paires de pôles et la vitesse de rotation synchrone du moteur triphasé asynchrone qui en résulte, de telle sorte que, au cours d'un mouvement de rotation vers une autre position relative, la tête revolver atteint la vitesse de rotation indexée limitée par la préindexation obtenue par le tourillon préindexé, et
f) un dispositif de commande (3) pour le tourillon préindexé et le moteur triphasé asynchrone,
caractérisée en ce que
g) le moteur triphasé asynchrone (2) est conçu avec un nombre de pôles variable,
h) le nombre de paires de pôles supplémentaire est inférieur au nombre de paires de pôles déterminant la vitesse de rotation indexée (nᵢ),
i) le dispositif de commande (3) active le nombre de paires de pôles plus élevé au moment où il est certain que le processus de ralentissement de la tête revolver (1) jusqu'à la vitesse de rotation indexée (nᵢ) est terminé, avant que la tête revolver (1) ne soit bloquée par le tourillon préindexé (4), et
k) des faces de contact sont associées non seulement à l'organe de verrouillage (19), mais aussi à l'anneau du carter de la tourelle (25), lesquelles sont situées chacune dans un plan perpendiculaire à l'axe de rotation de la tête revolver (1), et qui, par leur appui l'une contre l'autre, empêchent l'engrènement des dents (19' ; 119') de l'organe de verrouillage (19) dans les entredents (17'' ; 117'') de l'anneau 17 du carter de la tourelle (25) dans toutes les positions relatives de la tête revolver (1) autres que celles souhaitées.

2. Tourelle porte-outils selon la revendication 1, caractérisée en ce que le bobinage du stator du moteur triphasé asynchrone (2) est conçu comme un bobinage Dahlander.

3. Tourelle porte-outils selon la revendication 1 ou 2, caractérisée en ce que le dispositif de commande (3) déclenche la variation de pôles à partir d'un signal émis par un indicateur de position relative (7) dans la position relative correspondant au début du processus de ralentissement.

4. Tourelle porte-outils selon la revendication 1 ou 2, caractérisée en ce que, pendant un processus de réglage de la tête revolver (1), lorsque celle-ci atteint une position relative située directement avant la nouvelle position relative et autorisant un verrouillage, le dispositif de commande (3) génère un signal préliminaire, initié par un indicateur de position relative, à partir duquel est activé avec un décalage dans le temps le signal qui déclenche l'introduction du processus de ralentissement.

5. Tourelle porte-outils selon la revendication 4, caractérisée en ce que le dispositif de commande (3) est associé à un élément de retard du signal (9), dont le temps de retard est réglable, lequel détermine le décalage dans le temps du signal déclenchant le processus de ralentissement par rapport au signal préliminaire.

6. Tourelle porte-outils selon l'une quelconque des revendications 1 à 5, caractérisée en ce que les faces de contact sont formées par les sommets des dents (17', 19') ou par les surfaces (117'', 124) entre les dents (117', 119').

7. Tourelle porte-outils selon l'une quelconque des revendications 1 à 5, caractérisée en ce que les faces de contact sur l'organe de verrouillage et sur le carter de la tourelle sont prévues en dehors des anneaux munis de dents et d'entredents.

8. Tourelle porte-outils selon la revendication 6 ou 7, caractérisée en ce que le nombre de dents (17', 19') et d'entredents (17'', 19'') coïncide avec le nombre de positions relatives souhaitées de la tête revolver (1) et que chaque position relative, qui peut être choisie, correspond à chaque dent (17', 19') ou à chaque entredent (17'', 19'').

9. Tourelle porte-outils selon la revendication 7, caractérisée en ce que chaque position relative correspond à un groupe de dents (17', 19') ou à un groupe d'entredents (17'', 19'').
